# EUROPEAN PATENT APPLICATION

(11) **EP 1 139 257 A1**
(43) Date of publication of application: **04.10.2001**
(21) Application number: 01302249.6
(22) Date of filing: 12.03.2001
(51) Int. Cl.: G06F 17/60

(54) **Electronic financial advice method and system**

(30) Priority: 13.03.2000 GB 0006026
(71) Applicant: mPower Europe Limited, London E1 8AN (GB)
(72) Inventor: Goss, Benjamin Mark Ian, Blackheath, London SE13 5RY (GB); Donohue, Paul Andrew, Caterham, Surrey CR3 5AW (GB); Castle, Stephen Victor, Caterham, Surrey CR3 6EF (GB)
(74) Representative: Cross, James Peter Archibald

(57) **Abstract**

An electronic system provides financial advice based on personal data and financial objectives entered by users, by means of a rules engine. The rules engine detects whether the financial objectives match the personal data provided by the user and issues a challenge, or initiates a communication with a financial adviser, if they do not. The system stores general financial information and automatically provides updated financial advice to the user when the general financial information changes. The financial advice is in the form of a document compiled from text passages selected by matching predefined values to the user's personal data. The data and rules used to generate the financial advice are stored so as to be available for inspection, to demonstrate compliance with financial regulations.

## Description

The present invention relates to an electronic system for providing financial advice based on data provided by a user.

The world of personal finances and financial products is extremely complex and daunting for many individuals. With many hundreds, often thousands of products available in a market and a bewildering array of generic information sources available (e.g. newspapers, Internet web sites, TV etc.) this complexity is increased. As a result, financial advice which is tailored to an individual and which recommends a reasoned course of action specific to them is highly valued.

Traditionally, professional financial advice with this level of tailoring (i.e. specific to an individual) has only been available through a face-to-face meeting with an advisor. However, in a world in which convenient access to services electronically is increasingly important, this channel has significant drawbacks, in particular its lack of convenience.

Not surprisingly therefore, convenient electronic access to professional quality financial advice, tailored to an individual's specific circumstances is highly valued. It is not however currently provided.

There are a number of operators who provide information on the Internet and other electronic channels to customers as regards financial products that are on offer and approaches to financial planning. Some provide comparisons and produce 'Best Buy' lists. Some operators provide the capability for the customers to then purchase the relevant products on-line through an 'execution-only' process where the customer is not given any specific advice as to the suitability of the product for their needs. With these services the customer has to make the decision as to which product to purchase on their own.

Currently there are no convenient electronic services available which give the customer financial advice which is specific to them and reflects their personal situation.

These operators are generally described as Infomediaries and/or execution-only brokers. Some of these operators do provide to their users the option of being referred to a Financial Advisor, in the form of referral to a phone number, to a Web site or some similar process.

The advice process the customer subsequently receives is similar to the process that has existed for a number of years and has not yet changed significantly with the advent of the digital age. The best practice process is similar whether or not the customer is being advised on a regulated or unregulated product, however there are stringent enforceable compliance rules in relation to the advising of an individual in relation to a regulated product. Regulated products are prescribed by law and compliance rules on giving advice is regulated by a relevant authority (for instance; in the UK it would be the Personal Investment Authority (PIA) / Financial Services Authority (FSA)).

The basic process is as follows: a fact find/discovery is performed either by face-to-face interview, an on-line fact find, by post or some similar process. The advisor uses this to assess among other things the financial situation of the individual, their attitude to risk, their financial needs and aspirations. The key principle is that in order to advise a client specifically and according to best practice you must first 'Know your Customer' and their circumstances.

The reason that the advice process has not changed much with the advent of the Internet is that most companies in the financial services community are being very careful about ensuring that they are in full compliance with the regulatory advice rules. Whilst they may now collect the required fact find information on line, the remainder of the process is a mixture of manual review and advice work supported by some research (which may be sourced from an electronic database) and calculations (which may have some automated routines). The key thing is that there is a human financial advisor(s) at the centre of the process who pulls together the final financial and product advice and then decides that the advice is appropriate to deliver back to the client.

Due to the significant involvement of the human financial advisor the current process lacks convenience for the customer (there are frequently significant delays before first accessing an advisor and then subsequently receiving the advice) and the resultant advice and associated reports vary significantly in quality and consistency.

Customers cannot therefore currently obtain electronic, real time, financial advice specific to their situation, which is delivered in compliance with required regulatory compliance rules and is in line with the current generally accepted best practice processes for giving financial advice.

US 6,021,397 (Jones et al) concerns delivering to clients optimised investment portfolio allocations through interactive simulation to facilitate investment product selection. It is therefore heavily investment based and narrow in its application (the main concentration appears to be US orientated in the 401K area). It will also project these into the future to assist the client to reach specific financial goals. It is basically a financial modeller/calculator/forecaster for investments. There is no reference as to whether it is real time interactive with the client at all times, nor whether it is web based or requires human intervention at any point in the customer process. It does not cover non-investment products and does not address the issues of regulatory compliance.

US 5,920848 (Schutzer et al) concerns the use of computerised intelligent agents to facilitate the integration of details of financial transactions performed with computerised methods of financial accounting. Intelligent agents in the system also will take the information collected and analyse it to provide users with user-specific financial reports, profiles and advice and under appropriate conditions take action. In overview this systems main claim is that it is integrating on-line banking activities with personal financial accounting. It appears to be transaction-based and does not deal in any depth with assessing the overall financial situation of the individual nor does it have a very well developed related advice engine. It does not address regulatory compliance.

US 5,913,202 (Motoyama/Fujitsu) describes a financial intermediary system which stores client preference information and information about financial products. On request by a client for a particular type of financial product, the system selects suitable products based on the client's preferences. The system also provides an investment analysis and consultation service.

US 5,987,434 (Libman) describes a system for automatically preparing communications to clients on financial products, based on stored client information, financial product information and decision criteria. The client communications can be sent via any of a number of different channels, including internet, voice or printed materials.

US 6,154,732 (Tarbox/GuidedChoice.com) describes a system for providing investment advice according to a set of rules developed by a financial expert and programmed into a computer. Users enter their details on a worksheet which is processed by the computer to create an investment recommendation. The worksheet may be submitted via a web page.

In one aspect of the present invention, the electronic financial system enables individuals seeking financial advice to gain access to financial advice individually tailored to their situation via electronic interfaces. The process is automated and advice is presented in real-time. The advice process is carried out through the application of computerised programmed rules which operates independently of human intervention other than normal maintenance activities, exception management and rules amendments. The electronic financial system is applicable to all areas of financial advice and all products (including but not limited to: cashflow planning, net worth management, retirement planning, saving and investing, financial protection of own and dependants' financial health, investments, savings, pensions, life assurance, general insurance, mortgages, credit cards and loans).

The electronic financial system may provide an automated, real-time customer consultation using electronic media to carry out an intelligent data collection process. This process asks a dynamic set of questions, challenges answers and provides dynamic prompts to help people consider their own situation in sufficient detail and as efficiently as possible. In this way the system is less tedious and more relevant than a static form filling exercise, it can also be completed in a much shorter period of time and is a better experience for the user.

The electronic financial system may provide an automated, real time process by which best-practice financial planning is applied to data collected on a customer's situation and their financial situation and needs assessed.

The computerised rules may identify, in real time, individuals who cannot be advised automatically and offers them alternative options. We call this Exceptions Management.

The electronic financial system may provide an automated, real time process by which a range of different financial solutions and, if appropriate, products from one or more companies are analysed and assessed in relation to a customer's needs. A number of these products may be selected and recommended as best suited to meet the needs of the individual and reasons why this is the case may be created dynamically. Products advised upon may include, but are not restricted to, investments, savings, pensions, life assurance, general insurance, mortgages, credit cards and loans.

This advice may be presented via an automated, real time and dynamic audio/visual presentation accessed electronically or via other media. The presentation of advice is tailored to an individual customer and describes their specific financial needs and priorities, articulates their options and recommends a solution. Where appropriate it also makes specific recommendations as to which product(s) is/are best for them based on their identified financial needs. It also presents detailed reasons why in an easy to assimilate format.

The electronic financial system may provide this advice through a process which is compliant, where applicable, with the regulator's requirements, voluntary codes of practice and generally accepted financial advice best practice. In particular the process demonstrates: sufficient knowledge of a customer's situation, the suitability of any advice given, that a range of products have been considered and that the best one(s) were selected/recommended to meet the customer's needs.

Specific embodiments of the present invention will now be described with reference to the accompanying drawings, in which:
Figure 1 is a diagram illustrating the core elements used within the electronic financial system;
Figure 2 is a flow diagram illustrating one embodiment of the advisory stages through which the customer passes;
Figure 3 is a diagram illustrating one embodiment of the technical architecture used to run the electronic financial system;
Figure 4 shows a specific example of questions a customer is asked to determine how a particular service would meet their needs;
Figure 5 shows a specific example of a response to a customer after their submission of information;
Figure 6 shows a specific example of questions asked to obtain important personal information;
Figure 7 shows a specific example of a 'challenge', which questions a customer's view or response;
Figure 8 shows a specific example of a screen responding to an exception during the exceptions management process;
Figures 9 and 10 are tables which show two examples of a series of rules used to drive advisory recommendations; and
Figures 11 and 12 show two specific examples of the presentation of advice.

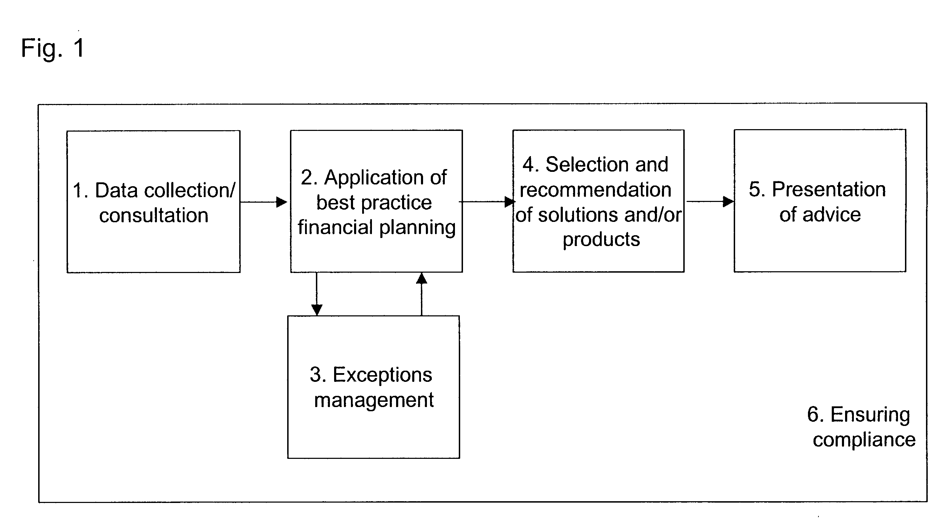

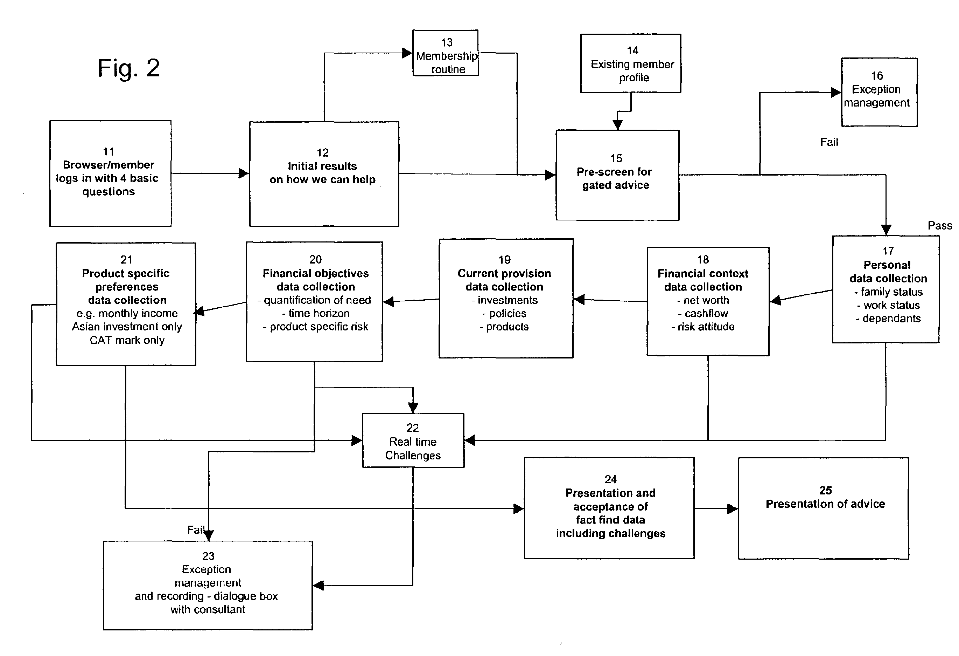

A system which enables individuals to obtain financial advice, individually tailored to their specific situation, via any electronic interface, is described. The core processes used within this system are illustrated in one embodiment in Figure 1 and in more detail in Figure 2.

As shown in Figure 1, the processes comprise a data collection/consultation stage 1, an application stage 2 at which rules conforming to best practice are applied to the collected data, an exceptions management stage 3 which is executed if the data does not conform to parameters set by the rules, a selection stage 4 where a range of financial products or solutions is selected based on the collected data, and a presentation stage 5 where the selected financial products or solutions are displayed. At each stage, the nature of the data collected, the rules which are applied and the information supplied to the user are designed to comply with the necessary financial regulations (stage 6).

Figure 2 illustrates the range of advisory stages through which a customer may pass. At stage 11, a user who is not already registered as a member logs into the system by answering four basic questions about their investment objectives (for example, which tax year they wish the advice to apply to, how much they wish to invest and how often) and their attitude to risk. At stage 12, the system selects an initial set of results based on the answers to the basic questions and displays these to the user. The results may be a general indication of types of recommendation that can be provided by the system. The user may then register as a member at stage 13, by choosing a user name and password which are recorded by the system so that data entered by the user can be retrieved in subsequent sessions. If already registered as a member, the user logs in at stage 14.

In either case, the user is then presented at stage 15 with a pre-screen for gated advice. If there is a fail condition, the system passes to an exception management procedure at stage 16 where the system determines which of several options, for example, email, chat session or telephone, to suggest the user receives advice from a qualified financial adviser. The fail condition will arise in cases where the systems rules identify that the case cannot be advised real time on-line without the direct assistance of a qualified financial adviser. An example of such a condition is if the user's investment preferences (for example investment time horizon) do not match with the investment methodology defined within the system or the user already holds an investment product which makes them ineligible to purchase another in the current tax year.

If there is a pass condition, the user is presented at stage 17 with a web form for the collection of personal data relating for example to family status, work status and any dependents. Once this information has been entered and submitted, the user is presented at stage 18 with a financial context data collection form in which the user enters details such as their net worth, cashflow and risk attitude. Once this information has been entered and submitted, the user is presented at stage 19 with a current provision data collection form in which the user enters details of any investments, policies and products already held. Once this information has been entered and submitted, the user is presented at stage 20 with a financial objectives data collection form in which the user enters information such as quantification of need, time horizon and product-specific risk. Once this information has been entered and submitted, the user is presented at stage 21 with a product specific preferences form in which the user enters specific preferences such as a monthly income requirement, Asian investment only, or CAT mark products only.

At any of stages 17, 18, 20 and 21, the system checks the data submitted by the user against a set of criteria designed to test whether the data is realistic or likely to be correct. If the data fails to meet these criteria, a challenge screen is presented to the user at stage 22, asking whether the submitted data is correct. If the user confirms that it is correct, the system proceeds to the next stage. If the user indicates that the data is not correct, the system returns to the display of the form from which the data was submitted, to allow the user to amend the data.

At stage 20, the system checks the financial objectives against a set of criteria designed to test whether the user's objectives are suitable or realistic, given the information collected in the previous stages. If the financial objectives fail this test, then the user passes to an exception management stage 23, in which consultation with a human operator is initiated, as described in greater detail below.

After stage 21 the data entered by the user, together with an indication of any challenges made by the system and the fact that the user confirmed the data was correct, is presented to the user, who is prompted to confirm that the data is correct and that the conditions under which financial advice is given have been accepted. If the user confirms the data, financial advice is presented to the user at stage 25.

### Access to advice

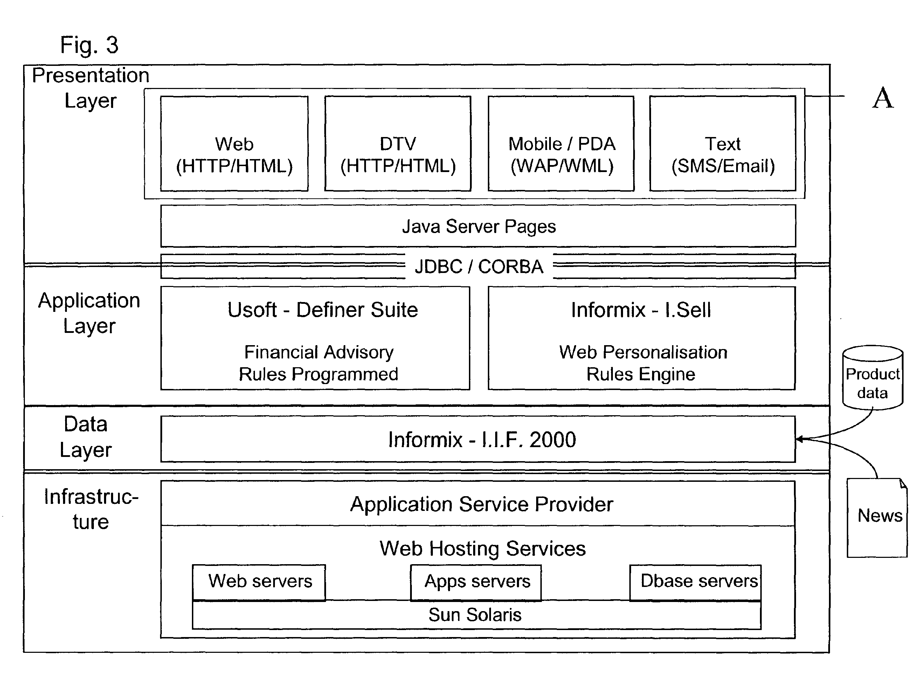

The automated, real time customer consultation can be accessed via any electronic interface, including, but not restricted to personal computers, personal digital assistants, kiosks, internet web browsers, digital (satellite and terrestrial) TV, web telephones and smart cards. Figure 3 shows one embodiment of the technical architecture used to run the electronic financial system and clearly shows the range of interface media which may be used.

In a presentation layer, the user may access the system using a web browser under HTTP/HTML protocols, a digital TV under HTTP/HTML protocols, a mobile terminal or PDA using WAP/WML protocols, or a text-based device using SMS or e-mail protocols. In general, the system provides an electronic apparatus which is accessible by client terminals using any suitable communications network and means for input and display. The electronic apparatus provides Java based electronic apparatus pages to the client terminals by means of a JDBC/CORBA interface to an application layer running on the same or another server.

The application layer comprises a business rules engine, such as Usoft Definer™, incorporating a set of financial advisory rules, and a web personalisation rules engine, such as Informix I.Sell™ (which is a rebranded version of ATG's Dynamo™ product). Both of these applications access a data layer comprising a database platform such as Informix Internet Foundation 2000™ and a database of data relating to financial products and other information compiled from news reports, such as tax and interest rates and savings tax thresholds.

The infrastructure is provided by an application service provider and web hosting services providing web servers, application servers and database servers, running on suitable server hardware and operating systems, such as Sun Solaris™.

The combination of the core hardware and software components offers users a convenient access to best practice financial planning and presentation of advice. The protocols for running, and communicating between, individual components ensure that the system operates at a level of effectiveness such that customers can gain quick and efficient access to the system.

### Data Gathering

The data gathering stages 17 to 21 involve the gathering and recording of relevant personal and financial information for the purpose of establishing an individualised customer profile. This method creates an effect of experiencing a conversation by requesting information from the customer in an intelligent way and immediately responding with (that is displaying or verbalising through their electronic interface) relevant suggestions, instructions and information.

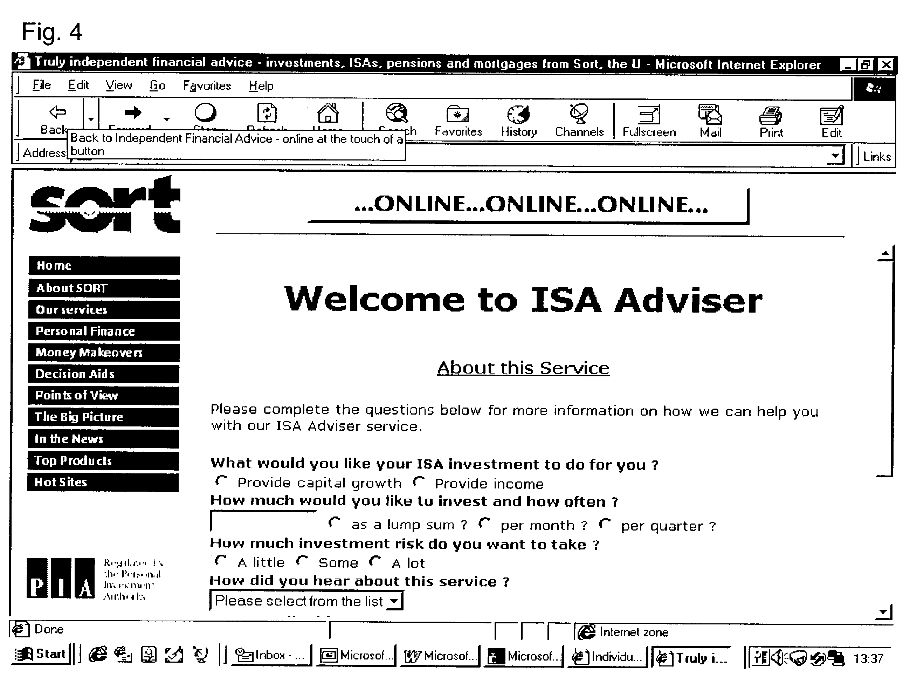

An example of stage 11 of this method is provided in Figure 4, with a web form comprising questions asked of a customer to determine how a particular investment advice service would meet their needs. In this case, the questions relate to financial advice concerning an ISA (Individual Savings Account).

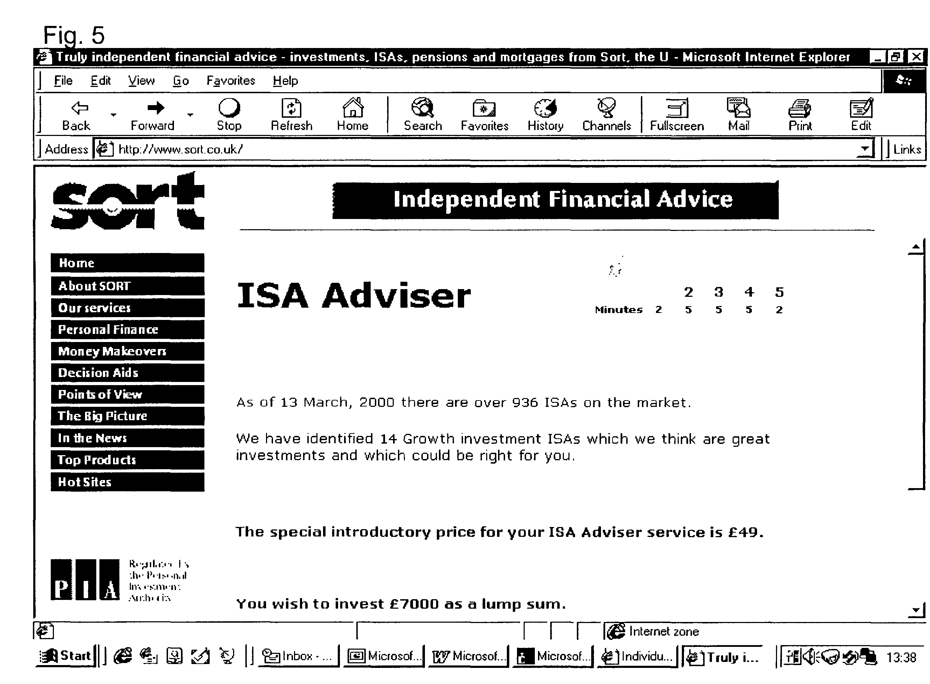

An example of stage 12 is shown in Figure 5, in which a specific response is provided to the customer, showing the availability of a particular type of investment, how this advice will be charged and how the advisory process will work for them. This is an example of a query on the underlying database, taking the user's criteria and assessing how many products currently match them. The power of this query process comes from *a priori* evaluation and tagging of database records to reflect their use to the customer e.g. as 'income' or 'growth' or 'low', 'medium' or 'high' risk.

The technique for gathering and recording personal and financial information for the purpose of establishing a customer profile uses rules defined in a computer-programmed application to control the collection of the data required.

To maximise the convenience and efficiency of the process for the customer, the system automatically records the data entered by the customer at the completion of each step in the data collection process to facilitate the completion of data collection in one session or over many sessions, to allow the completion of the data collection activity via different electronic interfaces over any period of time, and to allow the customer to advance through a series of data collection steps and to return to previous steps to amend data.

The programmed rules are executed when specific data values are entered via the electronic interface causing the following types of action to occur:
- analysis of the source of input (that is which form of electronic interface was used) to determine and subsequently control the presentation of forms (for data entry) and any content (including, but not restricted to, text, graphics, video and audio);
- analysis of the data input to determine its validity (according to predefined syntax rules and acceptable values or ranges of values);
- analysis of the data input to determine which questions to present and in which order;
- analysis of the data to determine which calculations to perform and what content must be extracted (if it is static content) or derived (if the content must be composed automatically);
- analysis of the data input to determine what the composition of the next screen should be and subsequently to issue instructions and content (including, but not restricted to text, graphics, video and audio) to the presentation software which actually assembles all the components of the screen;
- analysis of the data to determine which, if any, background tasks must be performed, including but not restricted to, database updates and sending emails;
- analysis of the data to determine whether specific regulatory, legal or fiscal conditions would be breached and subsequently to issue the correct advice to the customer indicating what course of action is required given those circumstances; and
- analysis of the data to determine what, if any, advice, using best practice financial planning rules, should be presented to the user to make them aware of the implications of their situation and to cause them to acknowledge a suggested course of action or refine their objectives.

The effect of these analytical processes and the dynamic creation of content which is displayed or verbalised back to the customer, is to create a series of interactions between the customer and the electronic interface which, in real time, prompts the customer to consider their situation in detail, quickly and conveniently.

### Application of best practice financial planning

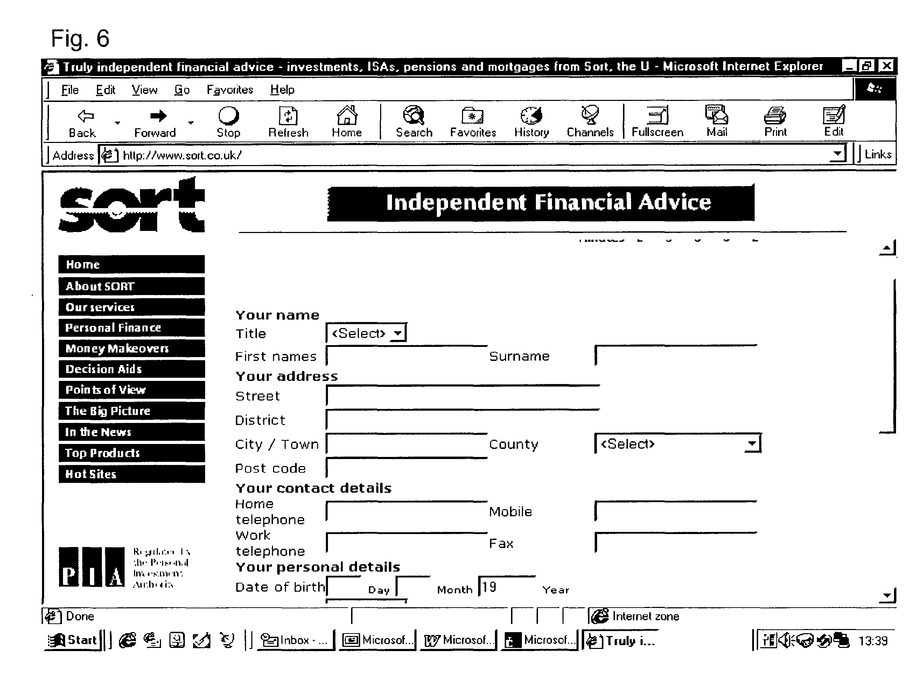

The application of best practice financial planning practices, which are embodied the computerised rules, ensures appropriate questions are asked and specific and relevant advice is given to the customer in real time, as they interact with the process. Figure 6 shows an example of the types of important personal information that are entered to invoke financial planning rules to determine how the customer's needs should be addressed.

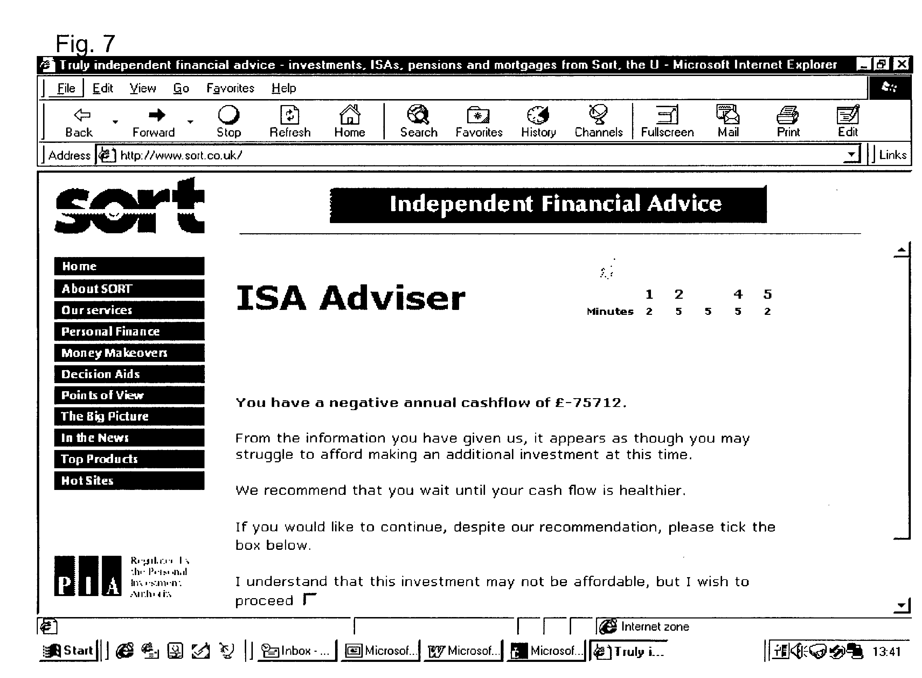

The financial planning rules will determine situations where a customer's requirements may not be appropriate. An example of this challenge, as occurs at step 22, is shown in Figure 7. In this instance a customer has a negative net cash flow. The rule used states that for users where net income minus expenditure, minus the amount to be invested (if regular) is negative, then a challenge as to the investment's affordability should be raised. The user may indicate that they wish to proceed, or may return to a previous stage to modify the data entered.

### Automatic Update

The system automatically invokes rules when any change in the value of any data field used by the rules occurs or a specific event occurs, which may be time sensitive. Where the rules engine determines that the change in the data value requires a business rule to be processed, this can produce a range of effects such as:
- the automatic update of financial forecasts and calculations and any other variable data value;
- the automatic invocation of financial planning rules which determines the content and form of financial advice to be sent to the customer;
- the automatic composition of the advice, according to presentation rules and preferences provided by the customer about how they want to receive such advice updates; or
- the automatic posting of the advice to the appropriate electronic device or service.

Therefore, the process for automatically generating advice, as well as being in real time, can also be provided in response to a specific event, such as a change in age, changes to employment, income, tax rates or stock market prices.

### Exception management

The rules will also determine whether a specific combination of data values relating to the customer will not permit the system to complete the data collection process and will not, therefore be able to complete the automatic provision of advice or product recommendations - called exception management.

The system will automatically indicate to the customer that their case cannot be processed and will offer one of several alternative courses of action, according to rules which determine the most efficient and effective option.

The options include, but are not restricted to:
- presentation of a form to facilitate collection of freeform data which is emailed to qualified financial advisors who can manually assess the case and contact the customer;
- presentation of a new window, known as a chat box, which facilitates a real time, text based conversation between the customer and a qualified financial adviser;
- presentation of a new form facilitating a request for a telephone based interaction, which if submitted by the customer will schedule a call back to the customer.

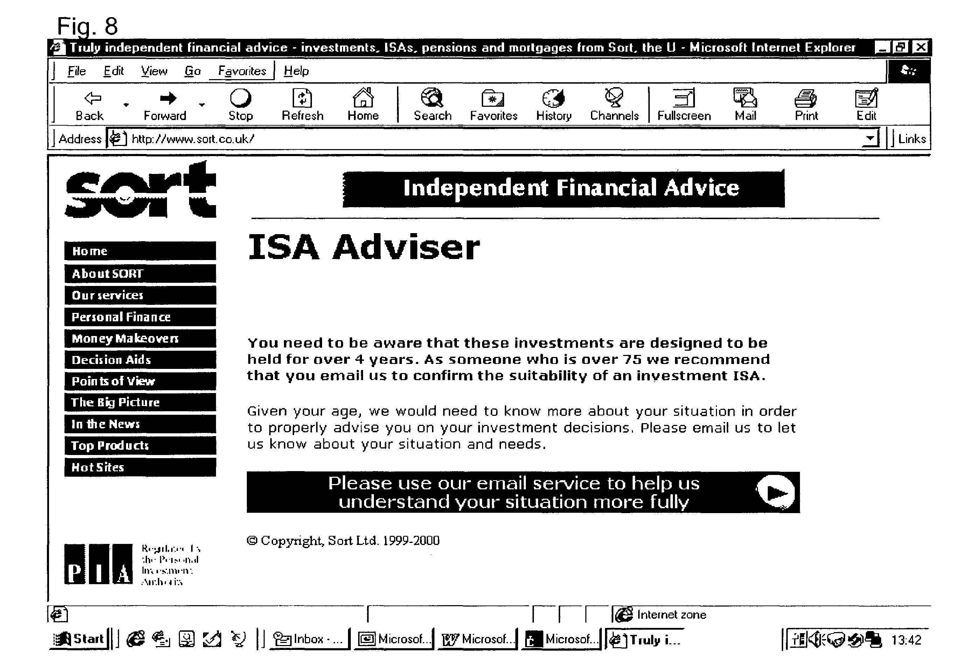

An example of the exception process is shown in Figure 8. The relevant rule states for example that where a customer is aged 75 or over then this service is not appropriate for them and the exception management process should be invoked. In this example, the user may click on a button to bring up a form which is completed and emailed to a financial adviser. The financial adviser can then contact the customer to discuss their requirements.

### Selection and Recommendation

The selection and recommendation of a financial product (including, but not restricted to, investments, savings, pensions, life assurance, general insurance, mortgages, credit cards and loans) which is appropriate and suitable for the specific individual is controlled by rules defined and invoked by a computer system.

The completion of specific data values in a customer profile is analysed by the system and uses best practice financial planning rules to automatically match product records suitable to the customer's specific needs and situation. An example of this in one embodiment of the invention in an Individual Savings Account advice module, can be described as follows:
If the customer is:
Aged between 18 and 75; and
Not unemployed; and
Not terminally ill; and
Wishes to invest within Inland Revenue limits; and
Has a risk tolerance sufficient for the stockmarket; and
Has an investment horizon of 4 years or more; and
Has no existing ISA investment; and
Is a UK resident for tax purpose; and
Can afford the investment

Then state that "An ISA investment would be suitable for you". Otherwise explain which characteristics are inappropriate and invoke a challenge/exception management.
If an ISA is suitable and the customer is
Working; and
Not within 5 years of retirement

Then state that "We suggest you use your ISA to invest for long term growth". Else use the net income analysis module to assess whether to recommend an income objective.
If the growth recommendation is accepted, and
Risk tolerance level selected is equal to or greater than "Careful Investor" (Five levels of risk tolerance are assessed based on answers to a number of questions)

Then request level of returns sought.

If level of returns sought (there are five levels of possible returns, assessed based on a number of questions) is not in excess of risk tolerance level then select appropriate ISA fund product group according to their pre-allocated risk and return ratings. If not then challenge whether customer understands how much risk is involved with the level of returns requested and suggest a lower level.

If appropriate level of returns are agreed and
the customer wishes specific preferences to be taken into account e.g. no funds with a front end charge, then use product rankings within risk return peer group to eliminate those without preferred characteristics in descending order.

Display selected products with reasons why they are strong investments and appropriate to customer.

The rules are defined indicating, for any given values in a customer profile, which products are considered most suitable, through:
- a value (or values) assigned to the product record by an expert, which is evaluated regularly and may change, indicating its ranking amongst its peer group for a specific customer profile,
- a value (or values) automatically generated by the system, according to a set of prescribed rules, which the system can then use to dynamically rank a product amongst its peer group for a specific customer profile,
- values that are used to quantify both hard variables, such as price and performance and softer, less tangible, variables such as risk, brand strength and service quality.

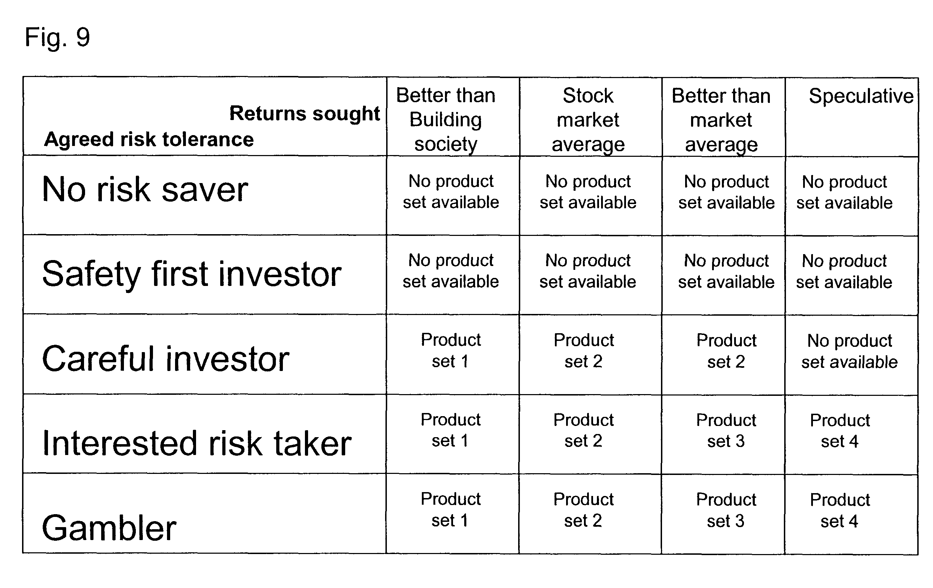

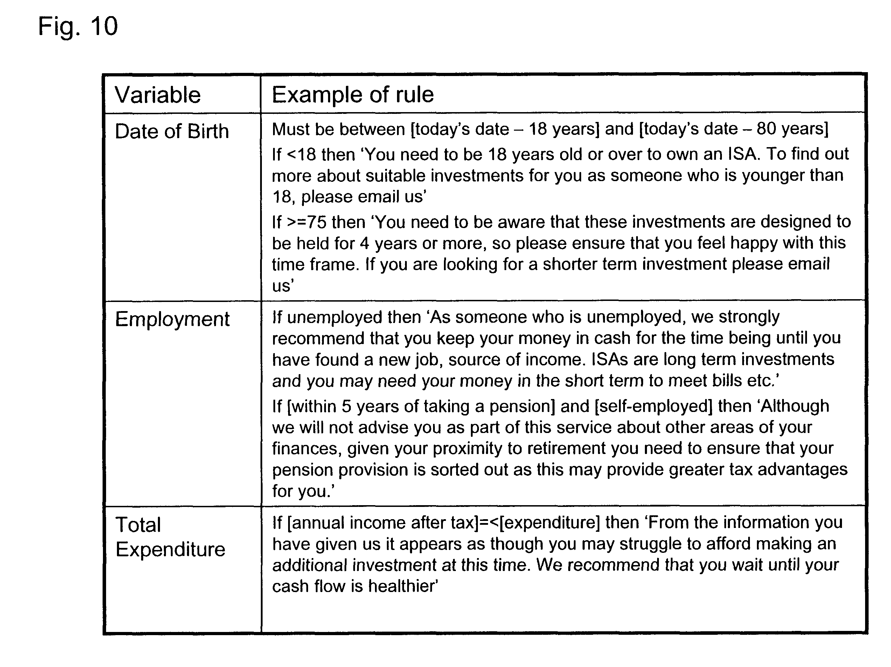

An example of a rule matrix used to drive advisory recommendations is shown in Figures 9 and 10.

### Presentation of advice

Specific preferences, stated explicitly by the customer or implied by the interface device being used to access the service, are stored as values which can be accessed by rules which determine the form (electronic text, digitised audio or video or in print) in which the customer wishes to receive their advice and when it is to be delivered. These presentation rules have the effect of creating a dynamic way of delivering financial advice.

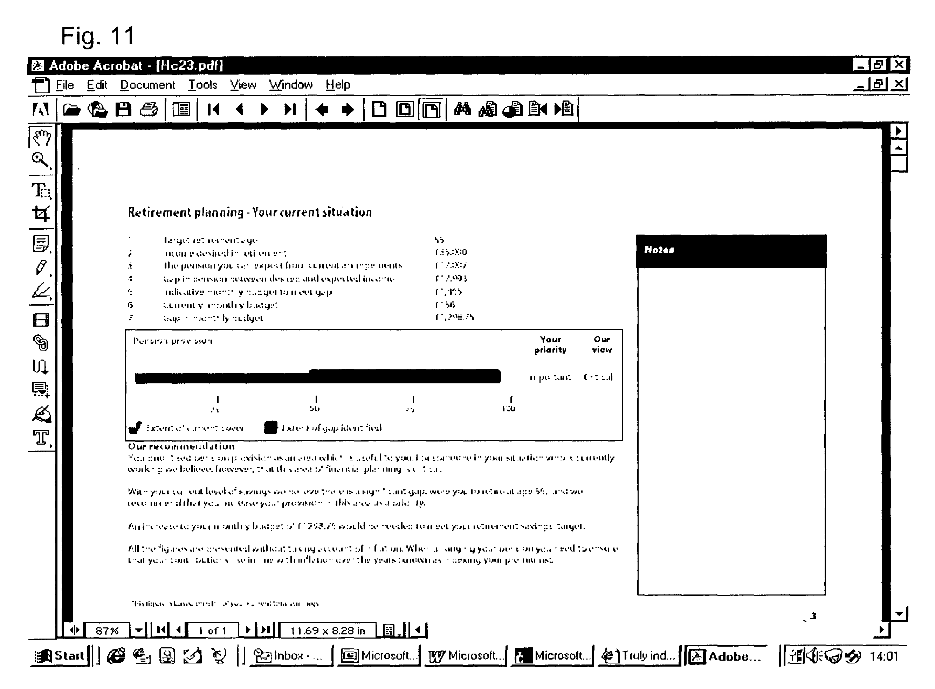

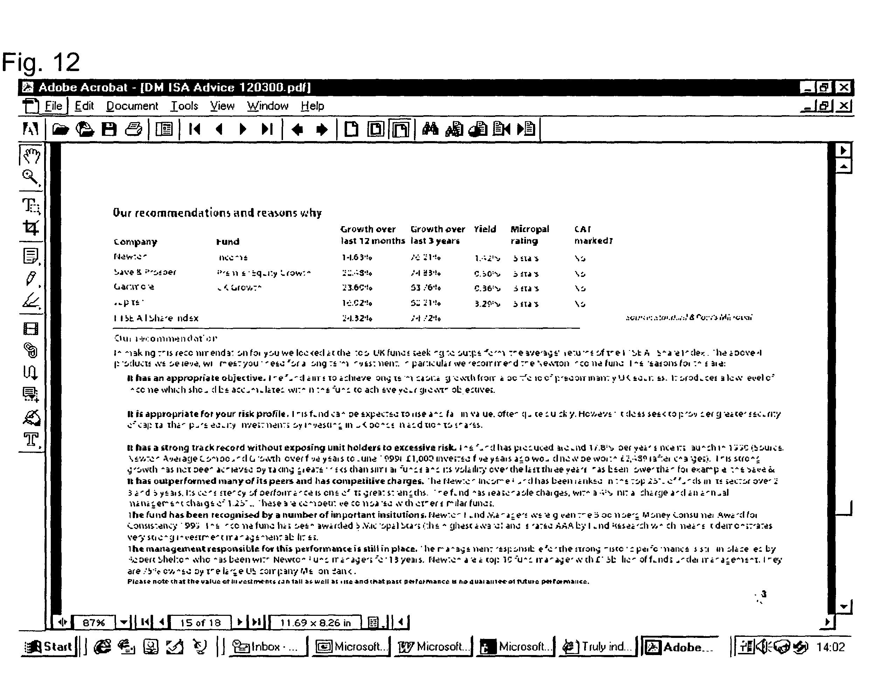

Advice received by the customer is saved automatically and is time, date stamped for future review. The advice presentation record pulls together in one document the content which explains the customer's specific financial needs and priorities, articulates their options and recommends a solution. Where appropriate it also makes specific recommendations as to which product(s) is/are best for them based on their financial needs. Specific examples of this are shown in Figures 11 and 12.

The user's data values are pattern matched to expected values to determine which business rules must be processed. The business rules describe what content should be created to insert into the report and what sequence. The content itself consists of prepared paragraphs, sentences and words, which are indexed with values which are analysed and matched to criteria in the business rule to determine of they should be used, and sentences where many of the values must be resolved from variables to fixed forms.

The process by which variables in pre-prepared sentences are resolved to their fixed forms involves parsing the sentence to identify the variable, identifying where the value for the variable is to be obtained, processing any business rules which may be needed, for example, if the variable must be calculated, retrieving the value and then inserts the fully resolved sentence in the place determined by the report generation business rules.

An advice presentation record can be updated by a customer amending information about themselves. Computerised rules analyse amendments and control when a new presentation is created. The system will create a history of advice presentation records which can be viewed by the customer and by regulatory inspectors.

As well as the presentation of advice, the content of the advice and recommendations is also dynamically generated according to rules in the system, including, but not restricted to:
- which content to extract from the database,
- how to format it, in terms on colour, size, font and position,
- which variable content to automatically compose and insert,
- where to insert variable content,
- through which media to present it (electronic, printed matter or digitised voice).

The rules analyse the following types of data to determine how to compose and present the advice and recommendations:
- specific features of the customer profile and customer contact preferences,
- best practice financial planning rules,
- regulatory, legal and fiscal rules,
- composition rules which describe the artistic look to be achieved and the appropriate selection of content (text, graphics, video or audio, etc.) to ensure compatibility with the customer's preferred media protocol (HTTP, WAP, paper etc.).

These rules ensure the advice is individually tailored to the customer.

### Ensuring compliance

Rules are also defined to ensure the process for advising on particular courses of action and suitable products satisfies regulatory, legislative and fiscal requirements.

When data entered by the customer is analysed by the system, it determines whether a breach of these rules has occurred or may occur.

The presentation of the advice to the customer concerning an actual or possible breach of regulatory, legal or fiscal rules is in the form of either:
- an error message which prevents the customer continuing with the service,
- a warning which the customer must acknowledge, confirming acceptance of any conditions or restrictions under which the advice will be given,
- an exception which prevents the customer from continuing with the service and requires the customer to interact with a qualified financial advisor.

The automation of the solution/product analysis and selection process, controlled by the computerised rules, ensures that the appropriate range of solutions/products is assessed and the best ones are recommended.

Every customer interaction with the system, the updating of every data element in the system, including the customer profile, products database and even updates to the rules themselves, is recorded to provide a complete audit trail for both internal and external inspection (including compliance monitoring by the regulatory authorities).

Other embodiments may be envisaged which nevertheless fall within the scope of the present invention.

## Claims

1. A method of electronically providing financial advice to a user, comprising:
a. receiving personal data from the user;
b. receiving financial objective data relating to one or more financial objectives from the user;
c. storing one or more financial rules;
d. processing said personal data and financial objective data according to said financial rules so as to determine the suitability of the financial objective data to the personal data; and
e. if the financial objective data is determined, at step d, not to be suited to the personal data, transmitting a request to the user to confirm the data received from the user.

2. A method according to claim 1, including, after step e, receiving a confirmation of the data from the user, and electronically providing financial advice to the user on the basis of the personal data and financial objective data received at steps a and b.

3. A method according to claim 1, including, after step e, receiving amended personal data and/or financial objective data from the user, and electronically providing financial advice to the user on the basis of the personal data and financial data incorporating said amended personal data and/or financial objective data.

4. A method according to claim 2, including storing a request indication that the request to confirm was sent to the user and a confirmation indication of the confirmation by the user, and presenting the request indication and the confirmation indication when the financial advice is electronically provided to the user.

5. A method of electronically providing financial advice to a user, comprising:
a. receiving personal data from the user;
b. receiving financial objective data relating to one or more financial objectives from the user;
c. storing one or more financial rules;
d. processing said personal data and financial objective data according to said financial rules so as to determine the suitability of the financial objective data to the personal data; and
e. if the financial objective data is determined, at step d, not to be suited to the personal data, initiating a communication between the user and a financial adviser.

6. A method according to claim 5, wherein said communication is initiated by presenting an electronic form to the user for the collection of additional data.

7. A method according to claim 5, wherein said communication comprises a real-time, text-based duplex communication.

8. A method according to claim 5, wherein said communication is initiated by presenting to the user a request form for a telephone-based interaction.

9. A method of receiving financial advice from an electronic apparatus, comprising:
a. sending personal data to an electronic apparatus;
b. sending financial objective data relating to one or more financial objectives to the electronic apparatus; and
c. if said personal data is determined by the electronic apparatus not to be suited to said financial objective data according to financial rules stored by the electronic apparatus, receiving a request to confirm the data sent to the electronic apparatus.

10. A method according to claim 9, including, after step c, sending a confirmation of the data to the electronic apparatus, and electronically receiving financial advice from the electronic apparatus on the basis of the personal data and financial objective data sent at steps a and b.

11. A method according to claim 9, including, after step c, sending amended personal data and/or financial objective data to the electronic apparatus, and receiving financial advice from the electronic apparatus on the basis of the personal data and financial data incorporating said amended personal data and/or financial objective data.

12. A method according to claim 10, including receiving an indication that said confirmation was sent when receiving the financial advice.

13. A method of receiving financial advice from an electronic apparatus, comprising:
a. sending personal data to an electronic apparatus;
b. sending financial objective data relating to one or more financial objectives to the electronic apparatus; and
c. if said personal data is determined by the electronic apparatus not to be suited to said financial objective data according to financial rules stored by the electronic apparatus, receiving an initiation of a communication with a financial adviser.

14. A method according to claim 13, wherein said initiation comprises an electronic form for the collection of additional data.

15. A method according to claim 13, wherein said communication comprises a real-time, text-based duplex communication.

16. A method according to claim 13, wherein said initiation comprises a request form for a telephone-based interaction.

17. A method of electronically providing financial advice to a user, comprising:
a. receiving personal data from a user;
b. receiving financial objective data relating to one or more financial objectives of the user;
c. storing one or more financial rules;
d. storing financial data not specific to said user;
e. in response to a change in any of said personal data, financial objective data, financial rules or financial data, processing said personal data, financial objective data and financial data according to said financial rules so as to generate said financial advice, and
f. transmitting said financial advice to the user.

18. A method according to claim 17, wherein step e is performed in response to a change in said financial data.

19. A method according to claim 17 or 18, including determining whether said change requires the generation of financial advice, wherein steps e and f are performed only if the generation of financial advice is determined to be required.

20. A method of electronically providing financial advice to a user, comprising:
a. receiving personal data from a user;
b. receiving financial objective data relating to one or more financial objectives of the user;
c. storing one or more financial rules including expected personal data values;
d. storing text passages including variables;
e. compiling said financial advice by matching said personal data to said expected personal data values so as to select one or more of said business rules, applying said selected one or more business rules so as to select one or more of said text passages, calculating values of the variables of the selected text passages, and compiling said selected text passages and calculated values to generate a financial advice document; and
f. transmitting said financial advice document to the user.

21. A method of electronically providing financial advice to a user, comprising:
a. receiving personal data from a user;
b. receiving financial objective data relating to one or more financial objectives from the user;
c. storing one or more financial rules;
d. processing said personal data and financial objective data according to said financial rules so as to generate said financial advice; and
e. transmitting said advice to the user;
wherein the generated financial advice, the values of the personal data and financial objective data from which the financial advice was generated are stored so as to be accessible subsequent to said financial advice being transmitted to the user.

22. A method according to claim 21, wherein the state of the financial rules is stored so as to be accessible subsequent to said financial advice being transmitted to the user.

23. A method according to claim 21 or 22, wherein the user is presented with the terms and conditions of receiving the financial advice prior to step e, and step e is performed only if an acceptance of the terms and conditions is received from the user.

24. A method according to any one of claims 1 to 8 and 17 to 23, wherein the data is received from the user and the financial advice is provided to the user over a communications network.

25. A method according to claim 24, wherein said network is a public packet-switched network.

26. A method according to any one of claims 9 to 16, wherein said data is sent and the financial advice is received over a communications network.

27. A method according to claim 26, wherein said network is a public packet-switched network.

28. A method according to claim 27, wherein said electronic apparatus is a server.

29. A computer program arranged to perform the method of any one of claims 1 to 8 and 17 to 25 when executed by a suitably arranged computer.

30. A carrier bearing a computer program according to claim 29.

31. A system for providing financial advice automatically to a user terminal from a server connected to a network, comprising:
a. a database storing personal data and financial objective data relating to one or more financial objectives of the user, received from the user over the network;
b. a rules engine storing one or more financial rules and processing said personal data and financial objective data according to said financial rules so as to determine the suitability of the financial objective data to the personal data; and
c. a communications interface connected to the network, for transmitting a request to the user to confirm the data received from the user if the rules engine determines that the financial objective data is not suited to the personal data.

32. A system for providing financial advice automatically to a user terminal from a server connected to a network, comprising:
a. a database storing personal data and financial objective data relating to one or more financial objectives of a user, received from the user over the network;
b. a rules engine storing one or more financial rules and processing said personal data and financial objective data according to said financial rules so as to determine the suitability of the financial objective data to the personal data; and
c. a communications interface for initiating a communication between the user and a financial adviser if the rules engine determines that the financial objective data is not suited to the personal data.

33. A system for providing financial advice automatically to a user terminal from a server connected to a network, comprising:
a. a database storing personal data and financial objective data relating to one or more financial objectives of a user, received from the user over the network;
b. a database storing financial data not specific to said user;
c. a rules engine storing one or more financial rules and processing said personal data and financial objective data according to said financial rules in response to a change in any of said personal data, financial objective data, financial rules or financial data so as to generate said financial advice, and
d. a communications interface connected to the network for transmitting said financial advice to the user.

34. A system for providing financial advice automatically to a user terminal from a server connected to a network, comprising:
a. a database storing personal data and financial objective data relating to one or more financial objectives of the user, received from the user over the network;
b. a rules engine storing one or more financial rules including expected personal data values;
c. a database storing text passages including variables;
d. a compiler for compiling said financial advice by matching said personal data to said expected personal data values so as to select one or more of said business rules, applying said selected one or more business rules so as to select one or more of said text passages, calculating values of the variables of the selected text passages, and compiling said selected text passages and calculated values to generate a financial advice document; and
e. a communications interface connected to the network for transmitting said financial advice to the user.

35. A system for providing financial advice automatically to a user terminal from a server connected to a network, comprising:
a. a database storing personal data and financial objective data relating to one or more financial objectives of the user, received from the user over the network;
b. a rules engine storing one or more financial rules and processing said personal data and financial objective data according to said financial rules so as to generate said financial advice;
c. a communications interface connected to the network for transmitting said advice to the user; and
d. a store for storing the generated financial advice, the values of the personal data and financial objective data from which the financial advice was generated, so as to be accessible subsequent to said financial advice being transmitted to the user.
